# FASCICULE DE BREVET EUROPEEN

(11) **EP 0 645 433 B1**
(45) Date de publication et mention de la délivrance du brevet: **10.09.1997**
(21) Numéro de dépôt: 94401905.8
(22) Date de dépôt: 26.08.1994
(51) Int. Cl.: C08L 95/00

(54) **Procédé de préparation de compositions bitume/polymère et leurs applications**
Verfahren zur Herstellung von Bitumen/Polymer Zusammensetzungen und ihre Anwendungen
Method of making bitumen/polymer compositions and their uses

(30) Priorité: 09.09.1993 FR 9310728
(43) Date de publication de la demande: 29.03.1995
(73) Titulaire: TOTAL RAFFINAGE DISTRIBUTION S.A., 92800 Puteaux (FR)
(72) Inventeur: Jolivet, Yannick, F-76600 Le Havre (FR); Malot, Michel, F-76210 Bolbec (FR); Perrot, Christian, F-76330 Notre Dame de Gravenchon (FR)
(74) Mandataire: Jolly, Jean-Pierre

(56) Documents cités:
- EP-A- 0 234 615
- EP-A- 0 458 386
- WO-A-90/10036
- GB-A- 1 130 140

## Description

La présente invention concerné un procédé de préparation de compositions bitume/polymère, les compositions obtenues par ce procédé et leurs applications. Elle concerne plus particulièrement des compositions bitume/polymère stables au stockage.

Le bitume que l'on utilise dans de telles compositions peut être obtenu, notamment, à partir du pétrole brut, par distillation de celui-ci et/ou désasphaltage de la fraction lourde issue de la (ou les) distillation(s). Le bitume est constitué, selon l'origine du pétrole brut, de proportions variables d'huiles paraffinique (aliphatique ou naphténique) et aromatique, de résines et d'asphaltènes (on peut se reporter à ce sujet, pour avoir plus de détails, au brevet EP-A- 246 956, dont la Demanderesse est titulaire).

Le bitume est un matériau viscoélastique : il tend à devenir dur et cassant aux basses températures ; il se ramollit et peut fluer aux températures élevées. Sa sensibilité à la température varie selon son origine et son procédé de fabrication.

L'accroissement des sollicitations des revêtements routiers, dû à une densité du trafic plus intense, à des forces d'accélération et de freinage des véhicules plus élevées, ainsi qu'à l'évolution du profil des poids lourds équipés maintenant de trois à quatre essieux arrière, ce qui augmente le temps d'application de la charge, nécessite l'adaptation des liants bitumineux allant dans le sens d'une augmentation de leur durabilité.

Il est bien connu de modifier le bitume par addition d'un polymère en vue d'améliorer cette durabilité. L'addition d'un polymère au bitume a pour objectifs :
- de diminuer la susceptibilité thermique des bitumes en élargissant l'intervalle de plasticité (par augmentation de la température de ramollissement et/ou diminution de la température de fragilité à froid),
- d'augmenter la résistance à la déformation, ainsi que le seuil de rupture.

Il a été prouvé que les performances d'une composition bitume/polymère dûment sélectionnée sont supérieures à celles d'un bitume non additionné de polymère. Cependant, les problèmes de compatibilité des composants pour atteindre le meilleur compromis entre les performances d'usage et la stabilité au stockage sont difficiles à résoudre.

De nombreux brevets revendiquent des compositions et/ou procédés pour les obtenir, qui apporteraient des solutions à ces problèmes.

C'est ainsi que la demande de brevet européen EP-A-458 386 revendique un procédé pour obtenir une composition bitume/polymère stable dans les conditions de fluidité qui existent pendant le stockage à chaud, ce procédé consistant à mélanger, à une température de 200 à 250 °C et pendant un temps, dépendant de la température, compris entre 45 minutes et 15 heures :
- de 85 à 98 % en poids de bitume, ayant une pénétrabilité comprise entre 30 et 220 dixièmes de mm à 25 °C, un point de ramollissement compris entre 35 et 55 °C, et un indice de pénétrabilité compris entre -1,5 et +1,5, et
- de 15 à 2 % en poids d'un copolymère styrène-butadiène (dit SBS) séquencé, ayant une structure étoilée ou linéaire.

Dans ce résumé de la demande de brevet européen EP-A-458 386 et dans la suite de la présente description , la pénétrabilité est mesurée conformément à la norme AFNOR NFT 66004, le point de ramollissement est déterminé conformément à la norme AFNOR NFT 66008 (il est dit "bille-anneau" en raison de la méthode employée), l'indice de pénétrabilité étant déterminé conformément à la méthode des Ponts et Chaussées RLB1-1964.

EP-A-0 234 615 décrit un procédé de préparation de mélanges bitume/polymère séquencé, avec addition d'un composé aromatique présentant une compatibilité de phases améliorée. La teneur en composé aromatique peut varier de 5 à 300 % en poids du copolymère séquencé.

La Demanderesse a effectué et continue d'effectuer des travaux de recherche en vue de l'obtention de mélanges bitume/polymère et, plus particulièrement, bitume/SBS, stables au stockage, ayant de bonnes propriétés à froid et à chaud. Elle a ainsi pu établir que, lorsque le point de Fraass et le Δ de bille-anneau d'une composition bitume/polymère ne sont pas suffisants pour conférer à la composition des propriétés de stabilité et de tenue en température satisfaisantes, ceci provient d'une mauvaise sélection du bitume de départ.

Plus précisément, la Demanderesse a constaté, de façon surprenante, que les propriétés requises de stabilité et de tenue à froid de la composition bitume-polymère dépendent de façon étroite de l'aromaticité du mélange de départ, considérée au moment de la réalisation de cette composition. Autrement dit, la Demanderesse a établi que, pour un bitume et un polymère déterminés, une gamme spécifique de taux de composés aromatiques du mélange de départ correspond à un point de FRAASS satisfaisant et une stabilité au stockage améliorée pour la composition résultante.

La demande de brevet européen précitée, EP-A-458 386, ne mentionne pas l'importance de ce critère. En effet, le fait d'utiliser, comme l'enseigne cette demande de brevet européen, 85 à 89 % en poids de bitume ayant une pénétrabilité comprise entre 30 et 220 dixièmes de mm à 25°C, un point de ramollissement compris entre 35 et 55°C et un indice de pénétrabilité compris entre -1,5 et +1,5 n'apporte pas l'assurance d'obtenir de manière quasi systématique des compositions bitume/SBS stables au stockage.

La présente invention vise à résoudre ce problème en ajustant l'aromaticité du mélange de départ, par adjonction de composés aromatiques, de façon telle que l'on obtienne à coup sûr des compositions bitume/polymère ayant des propriétés physiques améliorées, par rapport au bitume non additionné de polymère, et en outre stables au stockage.

A cet effet, l'invention a pour objet un procédé de préparation d'une composition bitume-polymère, par mélange du bitume et du polymère à une température comprise entre 190 et 300°C, plus particulièrement entre 220 et 260°C, pendant une durée de préférence supérieure à 30 minutes, caractérisé en ce que l'on détermine par des essais préliminaires le domaine des taux d'aromaticité du mélange associés à un point de FRAASS de la composition finale égal ou inférieur à -13°C et à une stabilité au stockage de cette composition, définie par son Δ de bille et anneau, égale ou inférieure à 5°C, et en ce que, avant de procéder au mélange du bitume et du polymère et/ou au cours de ce mélange, on ajuste le taux d'aromaticité du mélange pour l'amener dans ledit domaine par addition d'au moins un composé aromatique au bitume et/ou au polymère.

Dans cet objet de l'invention et dans la suite de la présente description :
1. Le point de FRAASS, indicateur de la fragilité à froid, est déterminé conformément à la norme AFNOR T66-026 ;
2. La stabilité au stockage est déterminée en stockant à 165°C pendant 4 jours un échantillon de la composition dans un récipient cylindrique et en déterminant la température "bille-anneau" et la pénétrabilité des couches supérieure et inférieure de l'échantillon.

On peut ainsi obtenir les différences Δ bille-anneau et Δ pénétrabilité entre les couches supérieure et inférieure. Plus les Δ sont faibles, plus les compositions sont stables.

L'aromaticité nécessaire pour que la composition ait les qualités désirées peut être obtenue en ajoutant au bitume de départ et/ou au polymère un composé aromatique tel qu'un extrait aromatique obtenu lors de la désaromatisation des bases lubrifiantes et/ou une fraction lourde aromatique ("slurry") issue d'un procédé de craquage catalytique.

De très nombreuses méthodes existent pour mesurer la teneur en composés aromatiques d'un bitume et chaque pétrolier utilise sa propre méthode. La teneur en composés aromatiques mesurée a donc une signification relative pour une méthode donnée, mais ne constitue pas une caractéristique admise de façon générale dans la technique pour un bitume déterminé. De plus, même en ne considérant qu'une seule méthode de mesure, les comparaisons de valeurs ne peuvent se faire que lorsque les bitumes sont issus d'un même pétrole brut. Le procédé conforme à l'invention n'est toutefois pas lié à un mode spécifique de mesure de la teneur en composés aromatiques du bitume et c'est simplement à titre d'illustration que les exemples ci-après utiliseront la méthode SARA par chromatographie en phase liquide haute performance, conformément au Cahier du CSTB n° 2555, janvier février 1992, Analyse Rapide des Bitumes par Chromatographie, CHAIZE A., MARECHAL J.C. et GHALELE M.

Les applications des compositions conformes à l'invention constituent d'autres objets de l'invention.

Au sens de la présente invention, le bitume utilisable dans la composition bitume/polymère peut être un bitume qui sera appelé ci-après bitume "naturel", pour le différencier du bitume "synthétique" décrit plus loin. Ce bitume naturel est issu du pétrole brut, des schistes bitumineux, d'huiles lourdes, de sable bitumineux, ou même de charbon.

Le bitume naturel peut être par exemple :
**a)** la fraction la plus lourde obtenue par distillation directe sous pression atmosphérique ou sous pression réduite d'un pétrole brut ;
**b)** la phase lourde obtenue par désasphaltage au solvant d'une fraction lourde obtenue selon a) ;
**c)** le produit de l'oxydation, en présence ou non de catalyseurs, d'une fraction lourde selon a) ou d'une phase lourde selon b) ;
**d)** le produit de l'oxydation, en présence ou non de catalyseurs d'un mélange : d'une fraction lourde selon a) ou d'une phase lourde selon b) et
   - d'un distillat, ou
   - d'un extrait aromatique obtenu dans la désaromatisation des huiles lubrifiantes, ou
   - d'un brai de désasphaltage
**e)** un mélange d'un produit oxydé obtenu selon c) et d) ou d'une phase dure, et
   - d'un distillat, ou
   - d'un extrait aromatique obtenu dans la désaromatisation des huiles lubrifiantes, ou
   - d'un brai de désasphaltage, ou
   - d'une fraction lourde selon a) ou d'une phase lourde selon b)
**f)** une base viscoréduite, seule ou en mélange avec un des produits ci-dessus.
**g)** un des produits **a** à **f** en mélange avec,
   - un distillat, ou
   - un extrait aromatique obtenu dans la désaromatisation des huiles lubrifiantes, ou
   - un brai de désasphaltage, ou
   - une fraction lourde aromatique ("slurry") issue d'un procédé de craquage catalytique.

Le bitume utilisable peut être également un bitume synthétique ayant des caractéristiques voisines de celles d'un bitume "naturel" tel que décrit ci-dessus, par exemple des liants synthétiques clairs colorables par addition de pigments.

Il peut s'agir par exemple de résines de pétrole ou de résine indène-coumarone, en mélange avec des hydrocarbures aromatiques et/ou paraffiniques.

Les résines de pétrole peuvent être préparées par polymérisation d'hydrocarbures insaturés présents dans des fractions pétrolières insaturées, telles que les fractions obtenues par craquage thermique ou à la vapeur d'eau ou par pyrolyse.

Les résines indène-coumarone sont obtenues à partir des goudrons de houille.

Le polymère utilisable dans la composition selon l'invention peut être un polymère présentant des chaînes hydrocarbonées à hydrogène mobile, notamment choisi dans le groupe constitué par les caoutchoucs naturels ou les caoutchoucs synthétiques comme les copolymères styrène-butadiène statistiques, S.B.R. (styrene-butadiene-rubber), ou séquencés, S.B.S. (styrene-butadiene-styrene), linéaires ou étoilés, ou S.I.S. (styrene-isoprene-styrene).

La composition bitume-polymère peut contenir jusqu'à 25 % en poids de polymère, la teneur en polymère étant choisie en fonction de la nature du polymère, du bitume et des qualités désirées pour l'utilisation visée.

Dans le cas des applications routières (enrobés, enduits superficiels, émulsions), la composition bitume-polymère contient de préférence de 2 à 7 parties en poids de polymère pour 98 à 93 parties en poids de bitume.

En dessous de 2 parties en poids de polymère, l'addition de polymère est considérée comme sans effet sur les propriétés de la composition.

Au dessus de 7 parties en poids de polymère, le prix du polymère rend trop onéreuse l'application routière. En outre, la viscosité de la composition augmente et devient incompatible avec le matériel utilisé pour ces applications.

Dans le cas d'applications industrielles, telles que les chapes d'étanchéité, la composition contient de préférence plus de polymère, souvent plus de 10 parties en poids, pour obtenir au contraire une viscosité élevée et une température bille-anneau élevée, pour résister à la température.

Le bitume est choisi, du point de vue de sa constitution, pour avoir une bonne compatibilité avec le polymère en adaptant les rapports hydrocarbures saturés, aromatiques, résines et asphaltènes du bitume.

La composition selon l'invention peut contenir un copolymère de styrène et de butadiène, statistique ou séquencé, notamment séquencé (SBS), linéaire ou étoilé. Il peut s'agir de mélanges de polymères et/ou de polymères (ou d'un même polymère) de caractéristiques différentes, par exemple de masses moléculaires différentes.

La composition selon l'invention peut être préparée en mélangeant le bitume et le polymère à une température de préférence comprise entre 190 et 300°C, plus particulièrement entre 220 et 260°C, pendant un temps de préférence supérieur à 30 minutes.

L'aromaticité du mélange bitume-polymère, c'est-à-dire sa teneur en composés aromatiques, peut être réglée en ajoutant au bitume et/ou au polymère, un composé aromatique, avant d'effectuer le mélange et/ou au cours de celui-ci.

Le composé aromatique peut être ajouté au bitume avant l'introduction du polymère dans le bitume et/ou ultérieurement, par exemple en ajoutant le polymère au bitume sous forme d'une solution du polymère dans le composé aromatique.

La composition bitume-polymère selon l'invention allie une bonne stabilité au stockage et de bonnes tenues à froid et à chaud.

Cette composition peut être utilisée notamment avec des granulats ou charges classiques dans des applications routières :
a) en l'état pour la réalisation d'enrobés ayant une bonne tenue à l'orniérage et une excellente résistance à la fatigue ;
b) en l'état, ou fluxée par une coupe hydrocarbonée, pour la réalisation d'émulsions aqueuses bitumineuses ayant d'excellentes caractéristiques de vitesse de rupture et une excellente tenue mécanique ;
c) fluxée par une coupe hydrocarbonée pour la réalisation d'enduits superficiels anhydres à hautes performances mécaniques.

La composition selon l'invention est donc un liant multifonctionnel.

Les exemples qui suivent sont destinés à illustrer l'invention de façon non limitative.

### EXEMPLE 1

Cet exemple concerne la préparation de différentes compositions bitume/polymère à partir d'un polymère P et de différents bitumes et la comparaison des différentes compositions obtenues.
1. Polymère P
   Le polymère est un copolymère styrène-butadiène-styrène SBS de type étoilé, ayant les caractéristiques suivantes :
   - rapport massique styrène-butadiène : 30 %
   - masse moléculaire en poids Mw : 300 000
2. Bitumes
   On dispose de 6 bitumes T1, T2, A, B, C et D, dont les caractéristiques sont données dans le tableau I ci-après.

T1 et T2 sont des bitumes destinés à l'obtention de compositions témoin CT1 et CT2 ; A, B, C et D sont des bitumes destinés à préparer des compositions CA, CB, CC et CD selon l'invention.

Les caractéristiques de ces bitumes sont données dans le tableau I ci-après.

**TABLEAU 1**

| Bitume | T1 | T2 | A (3) | B (3) | C | D (3) |
|---|---|---|---|---|---|---|
| Bille-anneau en °C | 47 | 47 | 47 | 46 | 46,5 | 47,5 |
| Pénétrabilité en 1/10e de mm à 25°C | 89 | 87 | 78 | 100 | 90 | 85 |
| Point de FRAASS en °C (1) | -15 | -18 | -16 | -16 | -18 | -18 |
| Aromaticité en % masse d'hydrocarbures aromatiques (2) | 48,2 | 49 | 52,7 | 56,5 | 52,1 | 58,8 |
| Les bitumes témoins, T1 et T2, et selon l'invention, A, B, C et D, sont donc très semblables (voir les bille-anneau et la pénétrabilité), mais leur aromaticité est très différente. (1) le point de FRAASS est un indicateur de la fragilité à froid et est déterminé conformément à la norme AFNOR T66-026. (2) L'aromaticité est déterminée pour la méthode SARA (Saturés-Aromatiques-Résines-Asphaltènes) par chromatographie en phase liquide haute performance. (3) Les bitumes A, B et D sont obtenus en mélangeant :   a) un composé aromatique   b) une base bitumineuse BA, BB ou BD. | | | | | | |

Les caractéristiques des bases bitumineuses sont données dans le tableau II ci-après :

**TABLEAU II**

| | | | |
|---|---|---|---|
| Base bitumineuse | BA | BB | BD |
| Bille-anneau en °C | 60 | 62 | 59 |
| Pénétrabilité en 1/10éme de mm à à 25°C | 18 | 13 | 20 |

Les proportions de composé aromatique et de base bitumineuse dans les bitumes A, B et D sont données dans le tableau III ci-après :

**TABLEAU III**

| | | | |
|---|---|---|---|
| Bitume | A | B | D |
| % Composé aromatique en masse | 22 | 25 | 21 |
| % Base bitumineuse en masse | BA 78 | BB 75 | BD 79 |

Le composé aromatique est un extrait aromatique obtenu lors de la désaromatisation d'une coupe pétrolière destinée à l'obtention d'une base d'huile lubrifiante.

### 3. Compositions bitume/polymère

On mélange à 250°C 5g du polymère P à 95g g de bitume T1, T2, A, B, C ou D.

Le temps de mélange est de 1 h 45 mn, sauf pour CB, où le temps est de h.

Les caractéristiques des compositions obtenues sont données dans le Tableau IV ci-après.

Les compositions CT1 et CT2 sont des compositions témoin, les compositions CA, CB, CC et CD des compositions selon l'invention.

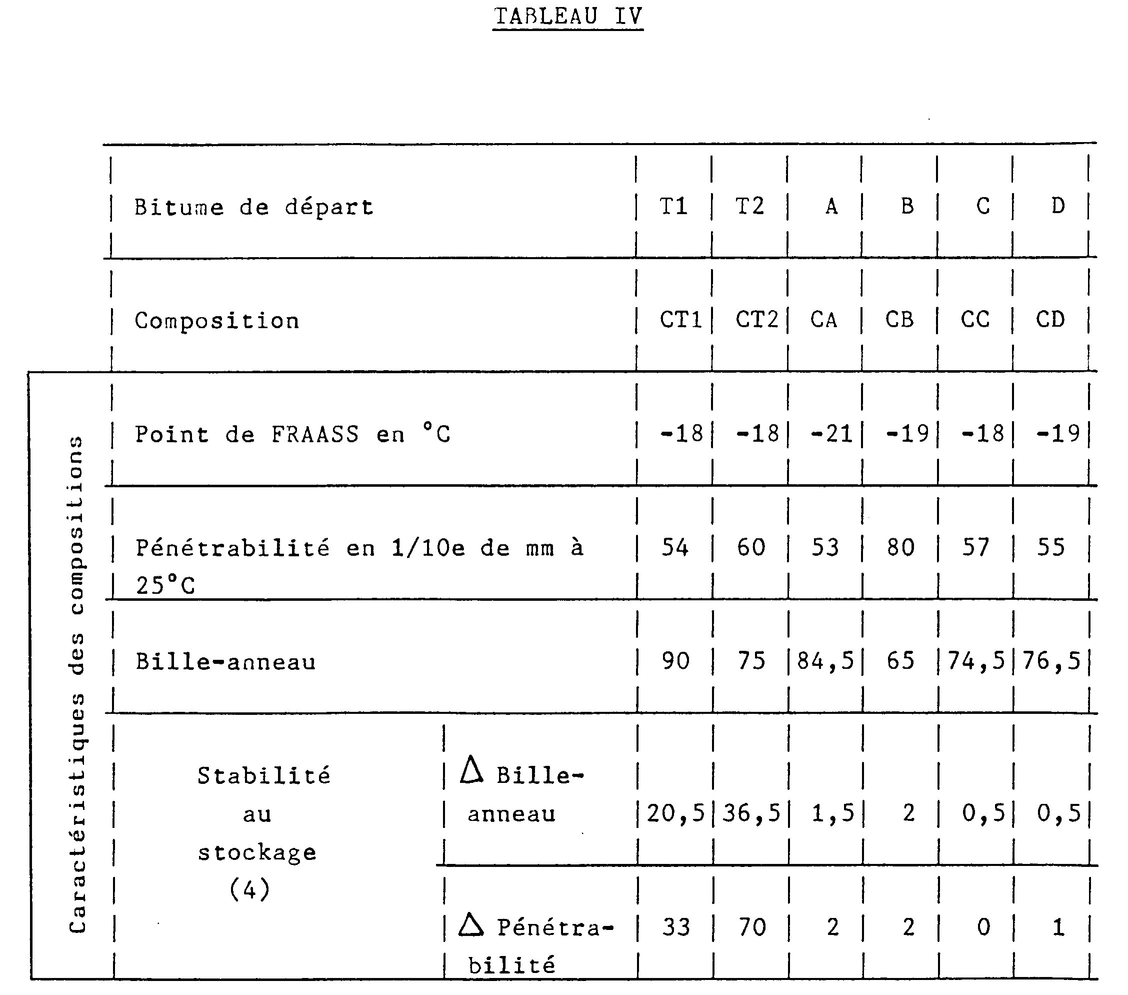

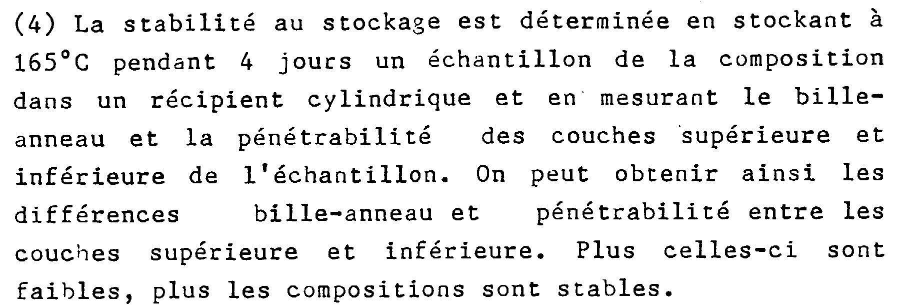

Ce tableau IV montre bien que les compositions CA, CB, CC et CD obtenues à partir de bitumes ayant une teneur en aromatiques plus élevée que les bitumes témoins T1 et T2 (se référer au tableau I) ont à la fois un bon point de FRAASS et une bonne stabilité au stockage, contrairement aux compositions témoins, CT1 et CT2, instables au stockage.

### EXEMPLE 2

Cet exemple concerne l'application à la réalisation d'enrobés de la composition témoin CT1 et de la composition selon l'invention CA.

Il faut d'abord préciser qu'une résistance élevée à la fatigue à la déformation imposée est un atout majeur, notamment pour la gamme des enrobés minces ou très minces mis en oeuvre sur support à forte déflexion.

On réalise des enrobés ET1 et EA, à partir des compositions CT1 et CA, répondant à la norme AFNOR NFP 98-130 et contenant 6,2 parties pour cent en masse des compositions CT1 et CA pour 100 parties en masse de granulats de diamètre 0 à 10 mm.

On effectue sur les enrobés ET1 et EA des essais normalisés destinés à apprécier leur performances mécaniques pour un trafic intense.

Les résultats figurent dans le tableau V ci-après.

**TABLEAU V**

| ENROBE | | |
|---|---|---|
| ESSAIS | ET1 | EA |
| RESULTATS | | |
| Fatigue LCPC selon norme AFNOR NFP 98261-1. Essai à 10°C. Fréquence de sollicitation : 25 Hz | 170 | 250 |
| ε₆ (x 10⁻⁶) | | |
| ε₆ est la déformation qui conduit à la rupture après 10⁶ cycles de chargement. Plus elle est élévée, plus le produit résiste à la fatigue. | | |
| Module de rigidité selon la norme AFNOR NFP 98260-2 Essai à 15°C. Fréquence d'essai 10 Hz. Résultat en MPa. En déformation imposée, plus le module est élevé, moins le produit est résistant en fatigue. | 5 400 | 5 000 |
| Orniérage LCPC selon la norme AFNOR NFP 98253-1 Essai à 60°C. Orniérage au bout de 30 000 cycles en mm. Plus l'orniérage est faible, meilleur est évidemment le produit. | 1,6 | 1 |

L'enrobé selon l'invention EA est donc bien meilleur que le témoin. La résistance à la fatigue (250) est, en particulier, remarquable. La Demanderesse n'a jamais obtenu ou eu connaissance d'un tel résultat malgré sa connaissance approfondie de la technique routière.

## Revendications

1. Procédé de préparation d'une composition bitume-polymère, par mélange du bitume et du polymère à une température comprise entre 190 et 300°C, plus particulièrement entre 220 et 260°C, pendant une durée de préférence supérieure à 30 minutes, caractérisé en ce que l'on détermine par des essais préliminaires le domaine des taux d'aromaticité du mélange associés à un point de FRAASS de la composition finale égal ou inférieur à -13°C et à une stabilité au stockage de cette composition, définie par son Δ de bille et anneau, égale ou inférieure à 5°C, et en ce que, avant de procéder au mélange du bitume et du polymère et/ou au cours de ce mélange, on ajuste le taux d'aromaticité du mélange pour l'amener dans ledit domaine par addition d'au moins un composé aromatique au bitume et/ou au polymère.

2. Procédé selon la revendication 1, caractérisé en ce que le bitume est un bitume "naturel".

3. Procédé selon la revendication 1, caractérisé en ce que le bitume est un bitume "synthétique".

4. Procédé selon l'une des revendications 1 à 3, caractérisé en ce que le polymère est un polymère présentant des chaînes hydrocarbonées à hydrogène mobile et choisi dans le groupe constitué par les caoutchoucs naturels ou synthétiques, comme les copolymères styrène-butadiène statistiques S.B.R. (styrene-butadiene-rubber) ou séquencés S.B.S. (styrene-butadiene-styrene), linéaires ou étoilés, ou S.I.S. (styrene-isoprene-styrene).

5. Procédé selon l'une des revendications 1 à 4, caractérisé en ce que, pour régler le taux d'aromaticité du mélange, on ajoute au bitume et/ou au polymère un extrait aromatique obtenu lors de la désaromatisation des bases lubrifiantes et/ou une fraction lourde aromatique ("slurry") issue d'un procédé de craquage catalytique.

## Patentansprüche

1. Verfahren zur Herstellung einer Bitumen/Polymer - Masse durch Mischen des Bitumens und des Polymers bei einer Temperatur zwischen 190 und 300°C, insbesondere zwischen 220 und 260°C, während einer Dauer, welche vorzugsweise 30 Minuten übersteigt, dadurch **gekennzeichnet**, daß durch Vorversuche der Bereich der Aromatisierungsgrade der Mischung ermittelt wird, welche mit einem FRAASS - Punkt der fertigen Masse gleich oder niedriger als -13°C und mit einer Lagerbeständigkeit dieser Masse, definiert durch ihr Δ von Kugel und Ring, gleich oder niedriger als 5°C verbunden sind, und daß vor dem Mischen des Bitumens und des Polymers und / oder im Verlauf dieses Mischens der Aromatisierungsgrad der Mischung durch Zugabe von mindestens einer aromatischen Verbindung zum Bitumen und / oder zum Polymer eingestellt wird, um ihn in den besagten Bereich zu bringen.

2. Verfahren nach Anspruch 1, dadurch **gekennzeichnet**, daß das Bitumen ein " natürliches " Bitumen ist.

3. Verfahren nach Anspruch 1, dadurch **gekennzeichnet**, daß das Bitumen ein " synthetisches " Bitumen ist.

4. Verfahren nach einem der Ansprüche 1 bis 3, dadurch **gekennzeichnet**, daß das Polymer ein Polymer ist, welches Kohlenwasserstoffketten mit beweglichem Wasserstoff aufweist und aus der Gruppe bestehend aus den natürlichen oder synthetischen Kautschuken, wie den linearen oder sternförmigen statistischen Styrol-Butadien-Copolymeren SBR ( Styrol-Butadien-Kautschuk ) oder Styrol-Butadien-Styrol-Blockcopolymeren SBS oder Styrol-lsopren-Styrol-Blockcopolymeren SIS, ausgewählt ist.

5. Verfahren nach einem der Ansprüche 1 bis 4, dadurch **gekennzeichnet**, daß zum Einstellen des Aromatisierungsgrades der Mischung dem Bitumen und / oder dem Polymeren ein bei der Aromatenextraktion aus den Schmiermittelbasen erhaltener aromatischer Extrakt und / oder eine von einem Verfahren zum katalytischen Cracken stammende aromatische schwere Fraktion (" slurry ") zugegeben wird.

## Claims

1. Method for the preparation of a bitumen-polymer composition by mixing the bitumen and the polymer at a temperature lying between 190 and 300°C, more particularly between 220 and 260°C, for a period of time preferably longer than 30 minutes, characterised in that preliminary tests are used to determine the range of aromaticities of the mixture associated with a Fraass point of the final composition equal to or below -13°C and with a stability during storage of this composition, defined by its ring-and-ball test Δ, equal to or less than 5°C, and in that, before mixing the bitumen and the polymer and/or during this mixing, the degree of aromaticity of the mixture is adjusted in order to bring it within the said range by the addition of at least one aromatic compound to the bitumen and/or to the polymer.

2. Method according to Claim 1, characterised in that the bitumen is a "natural" bitumen.

3. Method according to Claim 1, characterised in that the bitumen is a "synthetic" bitumen.

4. Method according to one of Claims 1 to 3, characterised in that the polymer is a polymer having hydrocarbon chains with mobile hydrogen and chosen from the group formed by natural or synthetic rubbers, like the statistical styrene-butadiene SBR copolymers (styrene-butadiene-rubber) or the block SBS copolymers (styrene-butadiene-styrene), with a linear or star structure, or SIS (styrene-isoprene-styrene).

5. Method according to one of Claims 1 to 4, characterised in that, in order to adjust the degree of aromaticity of the mixture, the bitumen and/or the polymer have added to them an aromatic extract obtained during the removal of aromatics from lubricating bases and/or a heavy aromatic fraction ("slurry") arising from a catalytic cracking process.
